Europäisches Patentamt

European Patent Office

Office européen des brevets

(19)

(11) **EP 0 683 609 B1**

(12) **EUROPÄISCHE PATENTSCHRIFT**

(45) Veröffentlichungstag und Bekanntmachung des Hinweises auf die Patenterteilung:
**20.01.1999 Patentblatt 1999/03**

(51) Int Cl.⁶: **H04N 5/455**

(21) Anmeldenummer: **95106425.2**

(22) Anmeldetag: **28.04.1995**

(54) **Einrichtung zur digitalen Demodulation der Bild- und Tonanteile eines Fernsehsignals**

Device for the digital demodulation of the picture- and sound signals of a television signal

Dispositif de démodulation numérique des signaux d'image et de son d'un signal de télévision

(84) Benannte Vertragsstaaten:
**DE FR NL**

(30) Priorität: **20.05.1994 DE 4417725**

(43) Veröffentlichungstag der Anmeldung:
**22.11.1995 Patentblatt 1995/47**

(73) Patentinhaber: **ROBERT BOSCH GMBH**
**70442 Stuttgart (DE)**

(72) Erfinder: **Göckler, Heinz, Dr.**
**D-71522 Backnang (DE)**

(56) Entgegenhaltungen:
**EP-A- 0 321 681        DE-A- 3 305 918**
**GB-A- 1 456 502**

- **PATENT ABSTRACTS OF JAPAN vol. 009 no. 143 (E-322) ,18.Juni 1985 & JP-A-60 025392 (MATSUSHITA DENKI SANGYO KK) 8.Februar 1985,**

**Beschreibung**

Die Erfindung bezieht sich auf eine Einrichtung zur digitalen Demodulation der Bild- und Tonanteile eines Fernsehsignals, welches in Zwischenfrequenzlage vorliegt.

Aus der DE 33 05 918 C2 ist es bekannt ein Fernsehsignal in Zwischenfrequenzlage mittels einem A/D-Wandler abzutasten und die weitere Verarbeitung, insbesondere die Demodulation, digital vorzunehmen. Die Frequenz des Abtastsignals beträgt hierbei weniger als das Doppelte der Trägerfrequenz.

Die EP 62 872 B1 zeigt die Signalverarbeitung eines abgetasteten Zwischenfrequenzsignals als komplexwertiges Digitalsignal.

Die ältere Patentanmeldung EP-A-0 651 526, veröffentlicht am 3.5.95, offenbart ein Verfahren zur Aufbereitung eines digitalen Frequenzmultiplexsignals aus Fernseh-Kanalsignalen. Die Kanalsignale werden überabgetastet, mittels eines komplexen Halbbandfilters gefiltert und mittels eines komplexen Mischers zur Weiterverarbeitung in der Frequenz verschoben.

Aufgabe vorliegender Erfindung ist es für die digitale Demodulation der Bild- und Tonanteile eine aufwandsgünstige Einrichtung anzugeben. Diese Aufgabe wird durch die Merkmale des Patentanspruches 1 gelöst. Vorteilhafte Ausgestaltungen sind in den Unteransprüchen aufgezeigt. Die Einrichtung gemäß der Erfindung hat den Vorteil, daß durch die unabhängige Verarbeitung der Tonsignale die Einzelfilter mit Minimalaufwand für die jeweilige Aufgabe unmittelbar ohne weitere Nebenbedingungen optimiert werden können. Insbesondere müssen sie jeweils nur eine Signalart optimal verarbeiten. Eine Verkettung der Mischeinrichtungen für die Bild- und Tonanteile ist nicht notwendig. In den Zweigen für die Tonanteile können weitgehend identische Baugruppen verwendet werden. Gegenseitige Störungen der Einzelzweige werden weitestgehend vermieden. Die Ton-FM-Demodulatoren können von ihrer Struktur her auf übliche UKW-FM-Demodulatoren angepaßt werden.

Anhand der Zeichnungen werden nun Ausführungsbeispiele der Erfindung erläutert.

Es zeigen

Fig. 1 ein Blockschaltbild einer Einrichtung gemäß der Erfindung,
Fig. 2 das Signalspektrum des Fernsehsignals vor und nach der Abtastung,
Fig. 3 den Aufbau der digitalen Vorverarbeitungsstufe.

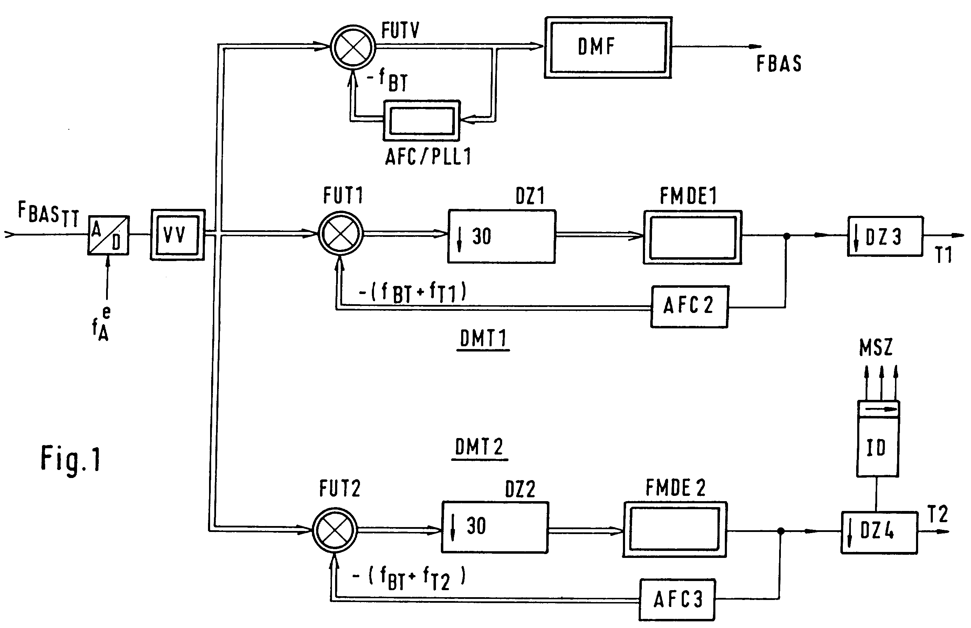

Das Blockschaltbild gemäß Fig. 1 zeigt die Einzelbaugruppen einer Einrichtung zur digitalen Demodulation der Bild- und Tonanteile eines analogen reellwertigen Fernsehsignals $FBAS_{TT}$, welche das in Zwischenfrequenzlage mit einem Bildträger bei 38,9 MHz vorliegende Fernsehsignal (CCIR-Norm) mittels einer Abtasteinheit - A/D-Wandler - geschlossen abtastet. Falls das Fernsehsignal in Zwischenfrequenzlage bereits als Digitalsignal vorliegt, kann die Abtasteinheit entfallen. Die Abtastfrequenz beträgt vorzugsweise $f_A{}^e = 28{,}27\overline{63}$ MHz.

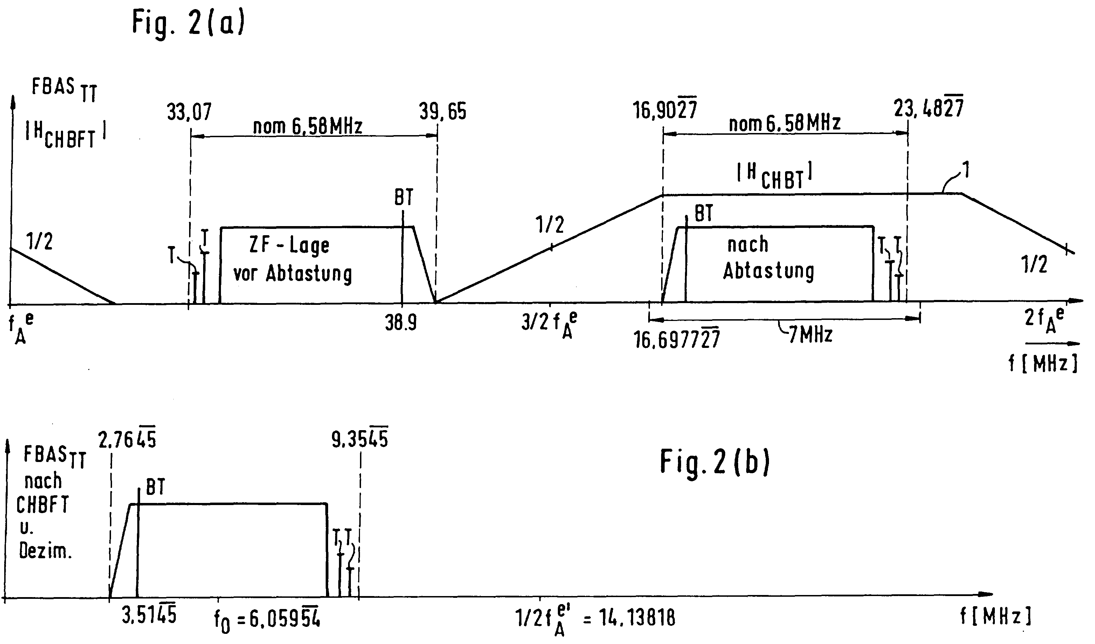

Fig. 2 zeigt das Fernsehsignal vor und nach der Abtastung (a) und nach Filterung und Dezimation (b). Das abgetastete reellwertige Fernsehsignal wird mittels einer digitalen Vorverarbeitungsstufe VV in ein komplexwertiges Digitalsignal überführt und spektral so verschoben, daß die Mittenfrequenz des komplexwertigen Digitalsignals bei der Frequenz 0 erscheint. Zur Verdeutlichung, wo das Digitalsignal in komplexwertiger Form vorliegt, sind in den Figuren die entsprechenden Signalpfade und Baugruppen mit Doppelstrichen gekennzeichnet.

Bei der Abtastung mit $f_A{}^e = 28{,}27\overline{63}$ MHz ist vorausgesetzt, daß durch ein vorgeschaltetes analoges ZF-Filter eine ausreichende Bandbegrenzung erreicht wird. Falls kein solches ZF-Filter vorgesehen ist, sollte ein Antialiasing-Filter AAF vorgeschaltet werden, welches das Fernsehsignal mit der Nutzbandbreite B so begrenzt, daß sich durch die Abtastung mit einer Abtastrate $f_A{}^e > 2B$ keine spektralen Überlappungen oder Überfaltungen mit dem Nutzspektrum oder dessen Spiegelfrequenzen ergeben. Nach der Analog-Digital-Umsetzung A/D ist das Fernsehsignal mit $f_A{}^e$ überabgetastet, um dann anschließend mit einem komplexen Digitalfilter CHBFT gefiltert und dezimiert zu werden durch Abtastung mit

$$f_A = f_A{}^e/2 = 14{,}13\overline{81}\ \text{MHz.}$$

Das komplexe Digitalfilter CHBFT extrahiert das Signalspektrum in Regellage, wie es für die nachfolgende TV-Demodulation benötigt wird. Bedarfsweise kann natürlich die Weiterverarbeitung auch in Kehrlage erfolgen.

Das komplexe Digitalfilter CHBFT ist vorzugsweise als L-Band Filter (komplexes Nyquistfilter) ausgebildet, wobei L ein ganzzahliger Dezimationsfaktor ist. Bei einem komplexen Nyquistfilter ist für den aufwandsgünstigsten Fall der mittlere Koeffizient reell 1/L oder rein imaginär j/L. Mit einem Dezimationsfaktor L=2, der die vorherige Überabtastung durch die Abtasteinheit A/D um den Faktor 2 wieder rückgängig macht, wird der mittlere Koeffizient 1/2 bzw. j/2 (Halbbandfilter).

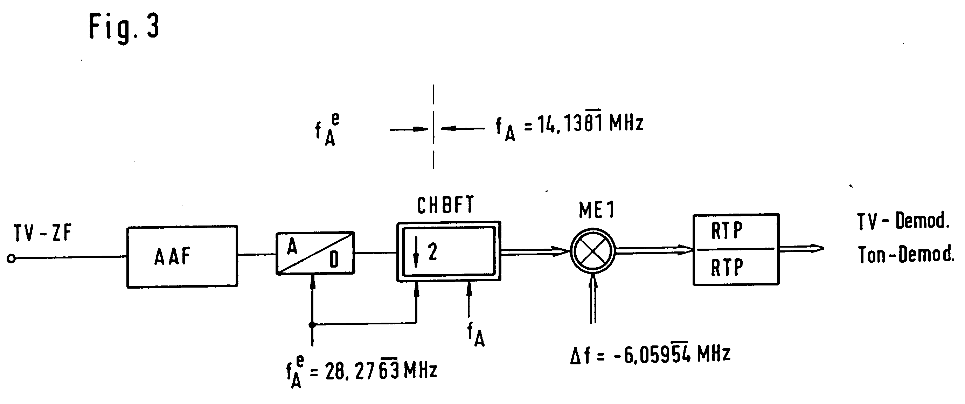

Fig. 3 zeigt die Baugruppen der Vorverarbeitungsstufe im Detail. Dieser Aufbau stimmt teilweise mit der Realisierung gemäß P 43 37 134 überein. Das Prinzip des komplexen Halbbandfilters CHBFT an sich ist in der DE-PS 36 21 737 beschrieben. Der Betrag der Übertragungsfunktion des komplexen Halbbandfilters $|H_{CHBFT}|$ ist in Fig. 2 dargestellt, mitsamt den Abtastfrequenzen $f_A{}^e$ bzw. $f_A$ und den Bandgrenzen. Die jeweilige Lage des Bildträgers ist mit BT gekennzeichnet und die Lage der Tonträger mit TT. Für die Frequenzverschiebung des komplexwertigen Digitalsignals derart, daß die Mittenfrequenz des komplexwertigen Digitalsignals bei der Frequenz 0 bzw. $f_{BT} = -2,545$ MHz erscheint, ist wie bei der Realisierung gemäß P 43 37 134 am Ausgang des komplexen Halbbandfilters CHBFT eine komplexe Mischeinrichtung ME1 vorgesehen, der eine Mischfrequenz von $f_o = 6,05\overline{54}$ MHz zugeführt wird. Das Ausgangssignal der komplexen Mischeinrichtung ME1 wird einem Paar identischer Tiefpässe RTP mit reellen Koeffizienten zugeführt, die rekursiv oder nichtrekursiv realisiert werden können. Ein Tiefpaß ist für den Realteil, der andere für den Imaginärteil des zu verarbeitenden komplexen Signals vorgesehen. Ein solches Filterpaar mit reellen Koeffizienten - es ist also keine Überkopplung von Realteil und Imaginärteil bzw. umgekehrt vorhanden - ist deshalb für die Filterung des komplexen Signals einsetzbar, da die Mittenfrequenz des Spektrums des komplexen (Zeit-)Signals bei f = 0 liegt. Diese Tiefpässe können als linearphasige FIR Filter aufwandsarm realisiert werden. Mit einem Filtergrad von N = 105 für das RTP Filterpaar kann eine Nachbarkanalselektion von $a_s = 75$ dB erreicht werden. Das Ausgangssignal der Vorverarbeitungsstufe VV wird nun in drei Zweigen - bei zwei vorgesehenen Tonträgern - weiterverarbeitet und zwar in einem ersten Zweig für die Bilddemodulation und in zwei weiteren Zweigen für die beiden Tonsignale T1 und T2 (Fig. 1). Bei nur einem zu verarbeitenden Tonträger entfällt natürlich der dritte Zweig.

Im ersten Zweig ist eine erste komplexe Mischeinrichtung FUTV vorgesehen, deren Mischfrequenz so gewählt ist, daß der Bildträger $f_{BT}$ nach der Mischung bei der Frequenz 0 erscheint. An die komplexe Mischeinrichtung schließt sich ein komplexer digitaler Demodulator DMF für den Bildanteil des Fernsehsignals an, mittels dessen das FBAS Signal, abgetastet im Beispiel mit $14,138\overline{18}$ MHz, extrahiert wird. Die komplexe Mischeinrichtung FUTV ist mit einer Frequenz- und/oder Phasenregelschleife AFC/PLL1 ausgestattet, die es ermöglicht, daß der Bildträger BT exakt bei der Frequenz 0 zu liegen kommt und die korrekte Phase aufweist (Einrastzustand).

Im zweiten Zweig ist ein digitaler Demodulator DMT1 für die Verarbeitung des ersten Tonträgers T1 vorgesehen, welcher gespeist von der Vorverarbeitungsstufe VV, zuerst eine komplexe Mischeinrichtung FUT1 für die Verarbeitung des Tonträgers T1 aufweist. Die komplexe Trägerschwingung für die Mischeinrichtung FUT1 wird über die Frequenz und/oder Phasenregelschleife AFC2 abgeleitet.

Im dritten Zweig, der wie der zweite Zweig aufgebaut ist, jedoch zur Verarbeitung des Tonträgers T2 dient, befindet sich der digitale Demodulator DMT2 mit der eingangsseitigen Mischeinrichtung FUT2. Die komplexe Trägerschwingung für diese Mischeinrichtung FUT2 wird über die Frequenz und/oder Phasenregelschleife AFC3 abgeleitet.

Die Mischeinrichtungen FUT1 und FIT2 bewirken durch die Wahl der Mischfrequenzen $-(f_{BT} + f_{T1})$ und $-(f_{BT} + f_{T2})$, daß die Mittenfrequenz der Tonträger nach der Mischung bei f = 0 liegen. Da ein FM-Spektrum ein Zweiseitenbandsignal darstellt, weisen die Dezimationsfiltereinrichtungen DZ1 und DZ2, die den Mischrichtungen FUT1 und FUT2 nachgeschaltet sind, reelle Koeffizienten auf.

Die Dezimationsfiltereinrichtungen DZ1 und DZ2 sind gleich aufgebaut und nehmen eine Abtastratenverminderung mit Q = 1/M vor, wobei Q eine rationale Zahl und M eine natürliche Zahl von z.B. 30 ist, d.h. die Abtastrate wird von $14,38\overline{18}$ MHz auf $471,\overline{27}$ kHz vermindert.

Solche Dezimationsfiltereinrichtungen sind beispielsweise in Multirate Digital Signal Processing von R.E. Crochiere und L.R. Rabiner, Prentice-Hall Inc. Englewood Cliffs, NJ. USA, beschrieben. Es kommen rekursive oder nichtrekursive FIR-Filter, die effizient als Polyphasenfilter realisierbar sind, in Frage. Vorzugsweise erfolgt die Dezimation in drei Stufen mit den Dezimationsfaktoren 5, 3 und 2. Die Ausgangssignale der Dezimationsfiltereinrichtungen DZ1 und DZ2 werden jeweils zu einem komplexen Ton-FM-Demodulator FMDE1 bzw. FMDE2 für jeweils eines der Tonsignale T1, T2 weitergeleitet. Solche komplexen Ton-FM-Demodulatoren mit komplexwertigen Eingangs- und reellwertigen Ausgangssignalen sind an sich bekannt (Signal Processing 9, 1985, North Holland, Seiten 263-276 "Equalization Problems in a Digital FM Receiver"; DE 42 41 965.4) und bedürfen daher keiner näheren Erläuterung. Die Frequenzregelschleifen AFC2 und AFC3 können vom Grade 1 sein. Alternativ kann auch eine kombinierte Frequenz- und Phasenregelschleife vorgesehen sein. Die Frequenzregelschleifen AFC2 und AFC3 lassen sich mit einem Frequenzfehlerdetektor realisieren, z. B. gemäß IEEE Transactions on Communications, Vol. 37, No. 2, 1989, Seiten 159-163. Die Frequenzregelschleifen AFC2 und AFC3 verarbeiten die Ausgangssignale der beiden FM-Demodulatoren FMDE1 bzw. FMDE2 zu zwei komplexen Trägerschwingungen der Frequenz $-(f_{BT} + f_{T1})$ bzw. $- -(f_{BT} + f_{T2})$. Der Bildträger $f_{BT}$, den die Regelschleifen AFC2 und AFC3 als Bezugsfrequenz benötigen, kann vom Ausgangssignal der Mischeinrichtung FUTV oder von einem Signal in dessen Regelschleife AFC/PLL1 abgeleitet sein, oder wird in den Regelschleifen AFC2 und AFC3 als nomineller Anfangswert fest eingestellt. Letzteres gilt auch für die Nominalwerte der Tonträgerfrequenzen $f_{T1}$ und $f_{T2}$. Zur Gewinnung digitaler Tonsignale mit standardisierten Abtastfrequenzen, z.B. 32 kHz, ist jeweils nur noch eine Dezimation um den Dezimationsfaktor 22/81 erforderlich. Dafür sind die Dezimationsfiltereinrichtungen DZ3 und DZ4 vorgesehen, die vorzugsweise zuerst um den Faktor 2 dezimieren und anschließend um den Faktor 11/81.

Zur Extraktion gegebenenfalls vorgesehener Ton-Identifikationssignale MSZ (Mono, Stereo, Zweiton bzw. Vielfachton) ist eine Einrichtung ID vorgesehen, die vorzugsweise an eine der zusätzlichen Dezimationsfiltdoereinrichtungen DZ3 bzw. DZ4 angeschlossen ist.

Für die Frequenz- und/oder Phasenregelschleife AFC/PLL1 kann prinzipiell die Lösung gemäß International Conference on Digital Satellite Communications, Kopenhagen, Mai 1992, Seiten B247-B254 verwendet werden.

Als Demodulator DMF für den Bildanteil eignet sich eine bekannte Lösung, z.B. gemäß DE 33 05 918 C2.

Die Erfindung erlaubt es, alle Filter als FIR-Filter mit linearer Phase auszubilden. Damit kann ein universeller Filterbaustein für alle unterschiedlichen Filterfunktionen eingesetzt werden.

**Patentansprüche**

1. Einrichtung zur digitalen Demodulation der Bild- und Tonanteile eines reellwertigen Fernsehsignals, welches in Zwischenfrequenzlage vorliegt, bestehend aus:

    - einer Abtasteinheit (A/D) zur geschlossenen Abtastung des Fernsehsignals in Zwischenfrequenzlage, falls das Fernsehsignal nicht bereits digital in Zwischenfrequenzlage vorliegt,
    - einer digitalen Vorverarbeitungsstufe (VV), die so ausgestaltet ist, daß das abgetastete reellwertige Fernsehsignal in ein komplexwertiges Digitalsignal überführbar ist und spektral so verschiebbar ist, daß die Mittenfrequenz des komplexwertigen Digitalsignals bei der Frequenz 0 erscheint,
    - einer Mischeinrichtung (FUTV) für die Bildanteile des komplexwertigen Digitalsignals, wobei die Mischfrequenz so gewählt ist, daß der Bildträger ($f_{BT}$) bei der Frequenz 0 erscheint,
    - mindestens einer Mischeinrichtung (FUT1, FUT2) für die Tonanteile des komplexwertigen Digitalsignals, wobei die Mischfrequenzen so gewählt sind, daß die um die Bildträgerfrequenz ($f_{BT}$) versetzten Tonträgerfrequenzen ($f_{BT} + f_{T1}$, $f_{BT} + f_{T2}$) jeweils bei der Frequenz 0 erscheinen,
    - digitalen Demodulatoren (DMF, FMDE1, FMDE2) für Bild- und Tonanteile zur Verarbeitung der komplexwertigen mittels der Mischrichtung/en (FUTV, FUT1, FUT2) gemischten Digitalsignale.

2. Einrichtung nach Anspruch 1, dadurch gekennzeichnet, daß der/den Mischeinrichtung/en (FUT1, FUT2) für die Tonanteile des komplexwertigen Digitalsignals jeweils eine Dezimationsfiltereinrichtung (DZ1, DZ2) nachgeschaltet ist zur Umsetzung der komplexwertigen Tonanteilsignale auf eine niedrigere Abtastfrequenz von beispielsweise Q der Ausgangsabtastfrequenz der digitalen Verar

beitungsstufe (VV), wobei Q eine rationale Zahl ist mit insbesondere Q = 1/M und M eine natürliche Zahl, z.B. 30 ist.

3. Einrichtung nach Anspruch 2, dadurch gekennzeichnet, daß der/den Dezimationsfiltereinrichtung/en (DZ1, DZ2) jeweils ein digitaler Ton-FM-Demodulator (FMDE1, FMDE2) nachgeschaltet ist.

4. Einrichtung nach Anspruch 3, dadurch gekennzeichnet, daß der/die digitale/n Ton-FM-Demodulator/en (FMDE1, FMDE2) so ausgebildet ist/sind, daß er/sie jeweils ein komplexwertiges Eingangssignal in ein reellwertiges Ausgangssignal überführt/überführen.

5. Einrichtung nach einem der Ansprüche 2 bis 4, dadurch gekennzeichnet, daß zur Ableitung der Mischfrequenz/en für die Mischeinrichtung/en (FUT1, FUT2) für die Tonanteile des komplexwertigen Digitalsignals mindestens eine Frequenz- und/oder Phasenregelschleife (AFC2, AFC3) vorgesehen ist.

6. Einrichtung nach einem der Ansprüche 1 bis 5, dadurch gekennzeichnet, daß die Bezugsfrequenz/en für die Freqeunzregelschleifen (AFC2, AFC3) für die Tonanteile des komplexwertigen Digitalsignals vom Ausgangssignal der Mischeinrichtung (FUTV) für die Bildanteile des komplexwertigen Digitalsignals oder von einem Signal in dessen Frequenz- und/oder Phasenregelschleife (AFC/PLL1) abgeleitet ist/sind.

7. Einrichtung nach Anspruch 6, dadurch gekennzeichnet, daß die Nominalwerte der Bezugsfrequenzen in den Frequenzregelschleifen (AFC2, AFC3) als Anfangswerte vorgegeben sind.

8. Einrichtung nach einem der Ansprüche 5 bis 7, dadurch gekennzeichnet, daß die Frequenz- und/oder Phasenregelschleife/n (AFC2, AFC3) der Mischeinrichtung/en (FUT1, FUT2) für die Tonanteile so ausgestaltet ist/sind, daß sie jeweils aus einem Ausgangssignal eines Ton-FM-Demodulators (FMDE1, FMDE2) ein komplexes Umsetzsignal für die Mischeinrichtung/en (FUT1, FUT2) für die Tonanteile erzeugt/erzeugen.

9. Einrichtung nach einem der Ansprüche 3 bis 8, dadurch gekennzeichnet, daß dem/den Ton-FM-Demodulator/en (FMDE1, FMDE2) jeweils eine zusätzliche Dezimationsfiltereinrichtung (DZ3, DZ4) zur Verminderung der Abtastfrequenz nachgeschaltet ist, wobei der Dezimationsfaktor dieser Dezimationsfiltereinrichtung/en insbesondere so gewählt ist, daß für die digital demodulierten Tonsignale standardisierte Abtastfrequenzen, z.B. 32 kHz, erzielbar sind.

10. Einrichtung nach einem der Ansprüche 2 bis 9, dadurch gekennzeichnet, daß eine Einrichtung (ID) zur Extraktion von Ton-Identifikationssignalen vorgesehen ist, die vorzugsweise an mindestens eine der zusätzlichen Dezimationsfiltereinrichtungen (DZ3, DZ4) angeschlossen ist.

11. Einrichtung nach einem der Ansprüche 1 bis 10, dadurch gekennzeichnet, daß die Abtasteinheit (A/D) so ausgebildet ist, daß das analoge reellwertige Fernsehsignal mit einem Überabtastfaktor von mindestens 2, bezogen auf die Nutzbandbreite des Fernsehsignals in Zwischenfrequenzlage, abtastbar ist.

12. Einrichtung nach Anspruch 11, dadurch gekennzeichnet, daß die digitale Vorverarbeitungsstufe (VV) eine Dezimationsfiltereinrichtung enthält zur Dezimation des dort aufbereiteten komplexwertigen Digitalsignals um einen Faktor, der dem Überabtastfaktor der Abtasteinheit (A/D) entspricht.

13. Einrichtung nach einem der Ansprüche 1 bis 12, dadurch gekennzeichnet, daß die digitale Vorverarbeitungsstufe (VV) ein Digitalfilter (CHBFT) zur Überführung des abgetasteten reellwertigen Fernsehsignals in das komplexwertige Digitalsignal aufweist.

14. Einrichtung nach Anspruch 13, dadurch gekennzeichnet, daß das Digitalfilter (CHBFT) aus einem komplexen L-Band Filter besteht, wobei L einen ganzzahligen Dezimationsfaktor bezeichnet.

**Claims**

1. Device for digital demodulation of the video and audio elements of a real television signal, which is at intermediate frequency, comprising:

   - a sampling unit (A/D) for closed sampling of the television signal at intermediate frequency, if the television signal is not already present in digital form at intermediate frequency,
   - a digital preprocessing stage (VV) which is designed such that the sampled real television signal can be converted into a complex digital signal and can be shifted spectrally such that the mid-frequency of the complex digital signal appears at the frequency 0,
   - a mixing device (FUTV) for the video elements of the complex digital signal, the mixing frequency being selected such that the video sub-carrier ($f_{BT}$) appears at the frequency 0,
   - at least one mixing device (FUT1, FUT2) for the audio elements of the complex digital signal, the mixing frequencies being selected such that the audio sub-carrier frequencies ($f_{BT} + f_{T1}$, $f_{BT} + f_{T2}$), which are offset by the video sub-carrier frequency ($f_{BT}$), in each case appear at the frequency 0,
   - digital demodulators (DMF, FMDE1, FMDE2) for video and audio elements for processing the complex digital signals which are mixed by means of the mixing device or devices (FUTV, FUT1, FUT2).

2. Device according to Claim 1, characterized in that the mixing device or devices (FUT1, FUT2) for the audio elements of the complex digital signal in each case have a decimation filter device (DZ1, DZ2) connected downstream for conversion of the complex audio element signals to a lower sampling frequency of, for example, Q at the output sampling frequency of the digital processing stage (VV), Q being a rational number where, in particular, Q = 1/M and M is a natural number, for example 30.

3. Device according to Claim 2, characterized in that the decimation filter device or devices (DZ1, DZ2) in each case have a digital audio-FM demodulator (FDME1, FMDE2) connected downstream.

4. Device according to Claim 3, characterized in that the digital audio-FM demodulator or demodulators (FMDE1, FMDE2) is or are designed such that it or they in each case converts or convert a complex input signal into a real output signal.

5. Device according to one of Claims 2 to 4, characterized in that at least one frequency control loop and/or phase locked loop (AFC2, AFC3) is provided in order to derive the mixing frequency or frequencies for the mixing device or devices (FUT1, FUT2) for the audio elements of the complex digital signal.

6. Device according to one of Claims 1 to 5, characterized in that the reference frequency or frequencies for the frequency control loops (AFC2, AFC3) for the audio elements of the complex digital signal is or are derived from the output signal of the mixing device (FUTV) for the video elements of the complex digital signal, or from a signal in its frequency control loop and/or phase locked loop (AFC/PLL1).

7. Device according to Claim 6, characterized in that the nominal values of the reference frequencies are predetermined in the frequency control loops (AFC2, AFC3) as initial values.

8. Device according to one of Claims 5 to 7, characterized in that the frequency control loop or loops and/or the phase locked loop or loops (AFC2, AFC3) of the mixing device or devices (FUT1, FUT2) for the audio elements is or are designed such that it or they in each case produces or produce, from an output signal of an audio-FM demodulator (FMDE1, FMDE2), a complex conversion signal for the mixing device or devices (FUT1, FUT2) for the audio elements.

9. Device according to one of Claims 3 to 8, characterized in that the audio-FM demodulator or demodulators (FMDE1, FMDE2) in each case has or have an additional decimation filter device (DZ3, DZ4) connected downstream of it or them in order to reduce the sampling frequency, the decimation factor of this decimation filter device or these decimation filter devices being selected, in particular, such that standardized sampling frequencies, for example 32 kHz, can be achieved for the digitally demodulated audio signals.

10. Device according to one of Claims 2 to 9, characterized in that a device (ID) is provided for extraction of audio identification signals, which device (ID) is preferably connected to at least one of the additional decimation filter devices (DZ3, DZ4).

11. Device according to one of Claims 1 to 10, characterized in that the sampling unit (A/D) is designed such that the analog real television signal can be sampled with an oversampling factor of at least 2, related to the useful bandwidth of the television signal at intermediate frequency.

12. Device according to Claim 11, characterized in that the digital preprocessing stage (VV) includes a decimation filter device for decimation of the complex digital signal, which is conditioned there, by a factor which corresponds to the oversampling factor of the sampling unit (A/D).

13. Device according to one of Claims 1 to 12, characterized in that the digital preprocessing stage (VV) has a digital filter (CHBFT) for conversion of the sampled real television signal into the complex digital signal.

14. Device according to Claim 13, characterized in that the digital filter (CHBFT) comprises a complex L-band filter, L designating an integer decimation factor.

**Revendications**

1. Installation de démodulation numérique des composantes image et son d'un signal de télévision à valeurs réelles, à fréquence intermédiaire, comprenant :

- une unité de détection (A/N) pour la détection bouclée du signal de télévision en fréquence intermédiaire, si ce signal n'existe pas déjà sous forme numérique en fréquence intermédiaire,
- un étage de traitement préalable numérique (VV), qui transforme le signal de télévision à valeurs réelles, détecté en signal numérique à valeurs complexes, et décale le spectre pour que la fréquence centrale du signal numérique à valeurs complexes apparaisse à la fréquence 0,
- un mélangeur (FUTV) pour les composantes image du signal numérique à valeurs complexes, la fréquence de mélange étant choisie pour que la porteuse image ($f_{BT}$) apparaisse à la fréquence 0,
- au moins un mélangeur (FUT1, FUT2) pour les composantes son du signal numérique à valeurs complexes, les fréquences de mélange étant choisies pour que les fréquences porteuses son ($f_{BT} + f_{T1}$, $f_{BT} + f_{T2}$), décalées de la fréquence de porteuse image ($f_{BT}$) apparaissent chaque fois à la fréquence 0,
- des démodulateurs numériques (DMF, FMDE1, FMDE2) pour la composante image et la composante son, pour traiter les signaux numériques à valeurs complexes, mélangés par le ou les mélangeurs (FUTV, FUT1, FUT2).

2. Installation selon la revendication 1, caractérisée en ce que les mélangeurs (FUT1, FUT2) pour la composante son du signal numérique à valeurs complexes sont suivis chaque fois d'un filtre à décimation (DZ1, DZ2) pour transformer les signaux de la composante son à valeurs complexes avec une fréquence de détection plus basse, par exemple Q, de la fréquence de détection de sortie de l'étage de traitement numérique (VV), Q étant un nombre rationnel avec notamment Q = 1/M, M étant un nombre naturel par exemple 30.

3. Installation selon la revendication 2, caractérisée en ce que le ou les filtres à décimation (DZ1, DZ2) sont suivis chaque fois d'un démodulateur FM son, numérique (FMDE1, FMDE2).

4. Installation selon la revendication 3, caractérisée en ce que le ou les démodulateurs FM son (FMDE1, FMDE2) sont réalisés pour transformer chaque fois un signal d'entrée à valeurs complexes en un signal de sortie à valeurs réelles.

5. Installation selon l'une quelconque des revendications 2 à 4, caractérisée par

au moins une boucle de régulation de fréquence et/ou de phase (AFC2, AFC3) pour fournir la fréquence de mélange destinée aux installations de mélange (FUT1, FUT2) pour la composante son du signal numérique à valeurs complexes.

6.  Installation selon l'une des revendications 1 à 5, caractérisée en ce que
la fréquence de référence pour les boucles de régulation de fréquence (AFC2, AFC3) pour la composante son du signal numérique à valeurs complexes est déduite du signal de sortie du mélangeur (FUTV) pour la composante image du signal numérique à valeurs complexes ou d'un signal de la boucle de régulation de fréquence et/ou de phase (AFC/PLL1).

7.  Installation selon la revendication 6, caractérisée en ce que
les valeurs nominales des fréquences de référence des boucles de régulation de fréquence (AFC2, AFC3) sont fixées comme valeurs initiales.

8.  Installation selon l'une des revendications 5 à 7, caractérisée en ce que
la ou les boucles de régulation de fréquence et/ou de phase (AFC2, AFC3) des mélangeurs (FUT1, FUT2) pour les composantes son, génèrent, à partir de chaque signal de sortie de démodulateurs FM son (FMDE1, FMDE2), un signal de transformation complexe pour les mélangeurs (FUT1, FUT2) pour la composante son.

9.  Installation selon l'une quelconque des revendications 3 à 8, caractérisée en ce qu'
un filtre à décimation supplémentaire (DZ3, DZ4) est associé chaque fois au démodulateurs FM son (FMDE1, FMDE2) pour réduire la fréquence de détection, le coefficient de décimation de ces filtres à décimation étant notamment choisi pour obtenir des fréquences de détection normalisées, par exemple 32 kHz pour les signaux son démodulés, numériques.

10. Installation selon l'une quelconque des revendications 2 à 9, caractérisée par
une installation (ID) pour extraire les signaux d'identification de son, qui est reliée de préférence à au moins l'un des filtres à décimation supplémentaires (DZ3, DZ4).

11. Installation selon l'une des revendications 1 à 10, caractérisée en ce que
l'unité de détection (A/D) est réalisée pour détecter le signal de télévision analogique à valeurs réelles avec un coefficient de surdétection égal au moins à 2 par rapport à la largeur de la bande utile du signal de télévision en fréquence intermédiaire.

12. Installation selon la revendication 11, caractérisée en ce que
l'étage de préparation numérique (VV) comporte un filtre à décimation pour décimer le signal numérique à valeurs complexes ainsi préparé, selon un coefficient de décimation correspondant au coefficient de surdétection de l'unité de détection (A/D).

13. Installation selon l'une des revendications 1 à 12, caractérisée en ce que
l'étage de préparation numérique (VV) comporte un filtre numérique (CHBFT) pour transformer le signal de télévision à valeurs réelles, détecté en un signal numérique à valeurs complexes.

14. Installation selon la revendication 13, caractérisée en ce que
le filtre numérique (CHBFT) est un filtre à bande L, complexe, L étant un coefficient de décimation à nombre entier.

Fig.1

EP 0 683 609 B1

EP 0 683 609 B1

## Fig. 2(a)

FBAS $_{TT}$

$|H_{CHBFT}|$

33,07    nom 6,58 MHz    39,65

16,90$\overline{27}$    nom 6,58 MHz    23,48$\overline{27}$

$|H_{CHBT}|$

1

1/2

BT

T   T

ZF - Lage
vor Abtastung

1/2

BT

nach
Abtastung

T, T

1/2

$f_A^e$

38.9    3/2 $f_A^e$

16,6977$\overline{27}$    7MHz

2$f_A^e$

f [ MHz ]

## Fig. 2(b)

FBAS$_{TT}$
nach
CHBFT
u.
Dezim.

2,76$\overline{45}$      9,35$\overline{45}$

BT

T, T

3,51$\overline{45}$    $f_0 = 6,059\overline{54}$      1/2$f_A^{e'} = 14,13818$

f [ MHz ]

Fig. 3

$f_A^e$ $\longrightarrow$ $\longleftarrow$ $f_A = 14{,}13\overline{81}$ MHz

CHBFT    ME1

TV-ZF    AAF    $\frac{A}{D}$    $\downarrow 2$    RTP    TV-Demod.
                                                    RTP    Ton-Demod.

$f_A^e = 28{,}27\overline{63}$ MHz    $f_A$    $\Delta f = -6{,}059\overline{54}$ MHz

EP 0 683 609 B1